**Europäisches Patentamt**

**European Patent Office**

**Office européen des brevets**

(19)

(11) Veröffentlichungsnummer : **0 383 229 B1**

(12)

# EUROPÄISCHE PATENTSCHRIFT

(45) Veröffentlichungstag der Patentschrift :
**06.05.92 Patentblatt 92/19**

(51) Int. Cl.$^5$ : **C10L 5/48**, C22B 1/248, C22B 1/00

(21) Anmeldenummer : **90102709.4**

(22) Anmeldetag : **12.02.90**

(54) **Verfahren zum Aufbereiten eisenhaltigen Ölschlamms für die Weiterverarbeitung.**

(30) Priorität : **13.02.89 DE 3904244**
**26.10.89 DE 3935727**

(43) Veröffentlichungstag der Anmeldung :
**22.08.90 Patentblatt 90/34**

(45) Bekanntmachung des Hinweises auf die
Patenterteilung :
**06.05.92 Patentblatt 92/19**

(84) Benannte Vertragsstaaten :
**AT BE CH DE DK ES FR GB GR IT LI LU NL SE**

(56) Entgegenhaltungen :
**EP-A- 0 198 302**
**EP-A- 0 288 150**
**AT-A- 378 200**
**DE-A- 2 539 195**
**DE-C- 586 159**
**GB-A- 1 434 406**

(73) Patentinhaber : **Schraufstetter, Wilfried**
**Schlossstrasse 5**
**W-8045 Ismaning (DE)**
Patentinhaber : **Gastinger, Dieter**
**Schwojerstrasse 17**
**W-8000 München 60 (DE)**

(72) Erfinder : **Schraufstetter, Wilfried**
**Schlossstrasse 5**
**W-8045 Ismaning (DE)**
Erfinder : **Gastinger, Dieter**
**Schwojerstrasse 17**
**W-8000 München 60 (DE)**

(74) Vertreter : **Lesser, Karl-Bolko, Dipl.-Ing.**
**Patentanwalt & European Patent Attorney**
**Gnesener Strasse 2**
**W-8068 Pfaffenhofen 1 (DE)**

EP 0 383 229 B1

## Beschreibung

Die Erfindung betrifft ein Verfahren zum Aufbereiten eisenhaltigen Ölschlamms für die Weiterverarbeitung.

Insbesondere in Walzwerken fallen beim Walzen große Mengen von eisenhaltigen Ölschlämmen an, deren Lagerung oder Wiederverwendung heute noch ein großes Umweltproblem darstellt. Auch in Kläranlagen, insbesondere solchen, die Stahlwerken oder metall-verarbeitenden Betrieben od.dgl. zugeordnet sind, fallen größere Mengen eisen- und ölhaltiger Klärschlämme an.

Solche Schlämme können bis zu 50 % Eisen enthalten. Die darin enthaltenen Eisenpartikel weisen eine so geringe Größe auf, daß ein Trennen des Eisens vom Öl und anderen Flüssigkeiten sehr schwierig bis unmöglich ist.

Wird eisenhaltiger Ölschlamm getrocknet, so kann das abgetrennte Eisen(-pulver) darüberhinaus aufgrund seiner geringen Partikelgröße als loses Material nicht wieder verhüttet werden.

Der Erfindung liegt deshalb die Aufgabe zugrunde, ein Verfahren zum Aufbereiten eisenhaltigen Ölschlamms für die Weiterverarbeitung zu schaffen, bei dem dieser wiederverwendet werden kann.

Diese Aufgabe wird durch das im Anspruch 1 beschriebene Verfahren gelöst. Bei diesem Verfahren zum Aufbereiten eisenhaltigen Ölschlamms für die Weiterverarbeitung wird der Ölschlamm zusammen mit Kohle und Kunststoff, insbesondere Kunststoffabfällen und / oder klebrigen, insbesondere organischen Schlämmen, in einer Schneckenpresse gemischt, geknetet und gepreßt und ein abgebundenes, festes weiterverarbeitbares Produkt extrudiert.

Beim Pressen verdampfen Flüssigkeiten mit relativ niedrigem Siedepunkt, wie Wasser, welches dadurch aus dem Feststoff-Flüssigkeits-Gemisch entfernt werden kann.

Die Kohle kann in Form von Koksgrus dem Gemisch zugegeben werden, der dabei gleichzeitig einer Wiederverwendung zugeführt werden kann.

Zweckmäßigerweise wird der feste Kunststoff, z.B. Kunststoffabfall gegebenenfalls vor dem Mischen mit den anderen Bestandteilen vorzerkleinert, so daß sich in der Schneckenpresse eine innige Vermischung ergibt. Dabei kann der Kunststoff z.B. in granulierter Form der Gemisch beigegeben werden. Das Granulat kann einen Durchmesser von 10 mm bis 40 mm aufweisen. So kann z.B. Folienabfall eine Fläche von 2 mm * 2 mm aufweisen. Dadurch erhält man eine gleichmäßige Mischung in dem aus der Schneckenpresse austretenden Material.

Gemäß einer bevorzugten Ausführungsform des Verfahrens weist das in die Schneckenpresse einzugebende Gemisch folgende Bestandteile auf:

50 % bis 60 % Ölschlamm,

30 % bis 35 % Kohle und

5 % bis 10 % Kunststoff.

Der Ölschlamm kann dabei einen Eisenanteil von etwa 50 % aufweisen.

Der Druck in der Schneckenpresse kann bis zu 100 bar betragen.

Gemäß einer besonderen Ausführungsform der Erfindung wird dem in die Schneckenpresse eingeführten Gemisch aus Ölschlämmen, Kohle und Kunststoff Luft zugemischt. Diese Luft wird beim Kneten in der Schneckenpresse aus dem Feststoffgemisch herausgedrückt, wodurch die für das Schmelzen der Kunststoffabfälle notwendige Wärme entsteht. Durch Regelung der Menge an zugegebener Luft kann die Temperatur in der Schneckenpresse entsprechend den verwendeten Kunststoffabfällen einfach gesteuert werden.

Dem Gemisch können in der Schneckenpresse noch weitere Flüssigkeiten, insbesondere eingedickte Abfallflüssigkeiten, beigemischt werden. So können z.B. schadstoffenthaltende Flüssigkeiten in die Schneckenpresse eingegeben werden. Es können auch Kunststoffabfälle und organischen Schlämme gemischt werden. Durch die große Wärme in der Schneckenpresse verdampft die Flüssigkeit, insbesondere Wasser. Die verdampfende Flüssigkeit kann, insbesondere, wenn auch sie schädlich ist, beim Entweichen aus der Schneckenpresse aufgefangen und kondensiert werden. Die Feststoffbestandteile werden in das Gemisch mit eingeknetet.

Das erhaltene weiterverarbeitbare Produkt tritt in Form von Pellets oder Stangen aus der Schneckenpresse aus. Diese können sehr leicht zu einem weiterverarbeitenden Betrieb, wie zu einem Hüttenwerk transportiert werden.

Das durch das Pressen in der Schneckenpresse erhaltene Produkt kann in einem Stahlwerk verhüttet werden. Beim Verhütten dieses Produktes verbrennt das in dem Produkt enthaltende Öl ebenso, wie der vorher eingebrachten Kunststoff, wie Kunststoffabfälle oder klebrige, insbesondere organische Schlämme, oder die in den anderen Abfallflüssigkeiten enthaltenden brennbaren Bestandteile. Da beim Verhütten sehr hohe Temperaturen notwendig sind, können deshalb bei diesem Verfahren auch sonst nur schwer wiederaufbereitbare oder vernichtbare chemische Abfallstoffe mit dem Gemisch in die Schneckenpresse eingeben werden, da diese beim späteren Verhütten verarbeitet werden.

2

Die Schneckenpresse kann z.B. eine Ausbildung aufweisen, wie sie in den WO-A-83/03.999, DE-A-3.714.508, DE-A-3.714.509 und DE-A-3.714.518, beschrieben sind. Dabei handelt es sich um eine Schneckenpresse mit zwei parallel zueinander angeordneten Schnecken. Es können aber auch andere Schneckenpressen verwendet werden.

**Patentansprüche**

1. Verfahren zum Aufbereiten eisenhaltigen Ölschlamms für die Weiterverarbeitung bei dem der Ölschlamm zusammen mit Kohle und Kunststoff, insbesondere Kunststoffabfällen und / oder organische Schlämme, in einer Schneckenpresse gemischt, geknetet und gepreßt und ein abgebundenes, festes weiterverarbeitbares Produkt extrudiert wird.

2. Verfahren nach Anspruch 1, dadurch gekennzeichnet, daß die Kohle in Form von Koksgrus dem Gemisch zugegeben wird.

3. Verfahren nach Anspruch 1 oder 2, dadurch gekennzeichnet, daß der feste Kunststoff gegebenenfalls vor dem Mischen mit den anderen Bestandteilen vorzerkleinert wird.

4. Verfahren nach einem der vorhergehenden Ansprüche, dadurch gekennzeichnet, daß der Kunststoff in granulierter Form dem Gemisch beigegeben wird.

5. Verfahren nach einem der vorhergehenden Ansprüche, dadurch gekennzeichnet, daß das in die Schneckenpresse einzugebende Gemisch folgende Bestandteile aufweist:

50 % bis 60 % Ölschlamm,

30 % bis 35 % Kohle und

5 % bis 10 % Kunststoff.

6. Verfahren nach einem der vorhergehenden Ansprüche, dadurch gekennzeichnet, daß der Druck in dem Gemisch bis zu 100 bar beträgt.

7. Verfahren nach einem der vorhergehenden Ansprüche, dadurch gekennzeichnet, daß dem Gemisch aus Ölschlämmen, Kohle und Kunststoff Luft zugemischt wird.

8. Verfahren nach einem der vorhergehenden Ansprüche, dadurch gekennzeichnet, daß dem Gemisch weitere Flüssigkeiten, insbesondere eingedickte Abfallflüssigkeiten, beigemischt werden.

9. Verfahren nach einem der vorhergehenden Ansprüche, dadurch gekennzeichnet, daß das erhaltene weiterverarbeitbare Produkt in Form von Pellets oder Stangen aus der Schneckenpresse austritt.

10. Verfahren nach einem der vorhergehenden Ansprüche, dadurch gekennzeichnet, daß das durch das Pressen in der Schneckenpresse erhaltene Produkt in einem Stahlwerk verhüttet wird.

**Claims**

1. Process for preparing iron-containing oil sludge for further processing in which the sludge, together with carbon and plastics, in particular plastics waste and/or organic sludges, are mixed, kneaded and pressed in a screw press and a bonded solid product capable of further processing is extruded.

2. Process according to claim 1 characterised in that the carbon is added to the mixture in the form of coke slack.

3. Process according to claim 1 or 2 characterised in that the solid plastics is pre-reduced if necessary before mixing with the other components.

4. Process according to one of the foregoing claims characterised in that the plastics is added to the mixture in granulated form.

5. Process according to one of the foregoing claims characterised in that the mixture to be fed into the screw press has the following composition:

50% to 60% sludge

30% to 35% carbon and

5% to 10% plastics.

6. Process according to one of the foregoing claims, characterised in that the pressure in the mixture amounts to up to 100 bar.

7. Process according to one of the foregoing claims, characterised in that air is added to the mixture of oil sludge, carbon and plastics.

8. Process according to one of the foregoing claims, characterised in that further liquids, in particular concentrated waste liquids, are mixed into the mixture.

9. Process according to one of the foregoing claims, characterised in that the product obtained and capable of further processing emerges from the press in the form of pellets or rods.

10. Process according to one of the foregoing claims, characterised in that the product obtained by pressing in the screw press is smelted in a steel works.

## Revendications

1. Procédé pour la préparation de boues contenant du fer pour le traitement ultérieur, dans lequel les boues sont mélangées avec du charbon et de la matière plastique, en particulier des déchets de matière plastique et/ou des boues visqueuses, en particulier organiques, malaxées et pressées dans une presse à vis et il est extrudé un produit ferme et lié pouvant être traité ultérieurement.

2. Procédé suivant la revendication 1, caractérisé en ce que le charbon est ajouté au mélange sous forme de cokes fins.

3. Procédé suivant la revendication 1 ou 2, caractérisé en ce que la matière plastique solide est, avant mélange, éventuellement pré-broyée avec les autres composants.

4. Procédé suivant l'une des revendications précédentes, caractérisé en ce que la matière plastique est ajoutée au mélange sous forme de granulés.

5. Procédé suivant l'une des revendications précédentes, caractérisé en ce que le mélange à introduire dans la presse à vis présente les composants suivants:

50% à 60% de boues,
30% à 35% de charbon, et
5% à 10% de matière plastique.

6. Procédé suivant l'une des revendications précédentes, caractérisé en ce que la pression dans le mélange est de jusqu'à 100 bars.

7. Procédé suivant l'une des revendications précédentes, caractérisé en ce que de l'air est ajouté au mélange de boues, charbon et matière plastique.

8. Procédé suivant l'une des revendications précédentes, caractérisé en ce que d'autres liquides, en particulier des déchets liquides épaissis sont ajoutés au mélange.

9. Procédé suivant l'une des revendications précédentes, caractérisé en ce que le produit pouvant être traité ultérieure obtenu sort de la presse à vis sous forme de boulettes ou de barres.

10. Procédé suivant l'une des revendications précédentes, caractérisé en ce que le produit obtenu par pressage dans la presse à vis peut être transformé dans une aciérie.